# EUROPEAN PATENT APPLICATION

(11) **EP 2 129 009 A1**
(43) Date of publication of application: **02.12.2009**
(21) Application number: 08702884.1
(22) Date of filing: 04.01.2008
(51) Int. Cl.: H04B 7/26

(54) **TRANSMITTER**

(30) Priority: 05.01.2007 JP 2007000833
(71) Applicant: NTT DoCoMo, Inc., Chiyoda-ku Tokyo 100-6150 (JP)
(72) Inventor: HARADA, Atsushi, Chiyoda-ku Tokyo 100-6150 (JP); ISHII, Minami, Chiyoda-ku Tokyo 100-6150 (JP); ABETA, Sadayuki, Chiyoda-ku Tokyo 100-6150 (JP); UMESH, Anil, Chiyoda-ku Tokyo 100-6150 (JP)
(74) Representative: HOFFMANN EITLE
(86) International application number: PCT/JP2008/050003
(87) International publication number: WO 2008/082013

(57) **Abstract**

A transmitter apparatus includes: an MAC-SDU receiver section (11) configured to receive an MAC-SDU in an MAC layer from an RLC layer; an MAC-PDU generator section (13) configured to generate an MAC-PDU by multiplexing the received MAC-SDU; and an MAC-PDU transmitter section (14) configured to transmit the generated MAC-PDU, MAC header added in the MAC-PDU includes fixed-length "LI" indicating a size of the MAC-SDU multiplexed into the MAC-PDU, and the RLC layer is configured to transmit the MAC-SDU to the MAC layer, the size of the MAC-SDU being not larger than a maximum size settable by the fixed-length "L1".

## Description

### TECHNICAL FIELD

The present invention relates to a transmitter apparatus.

### BACKGROUND ART

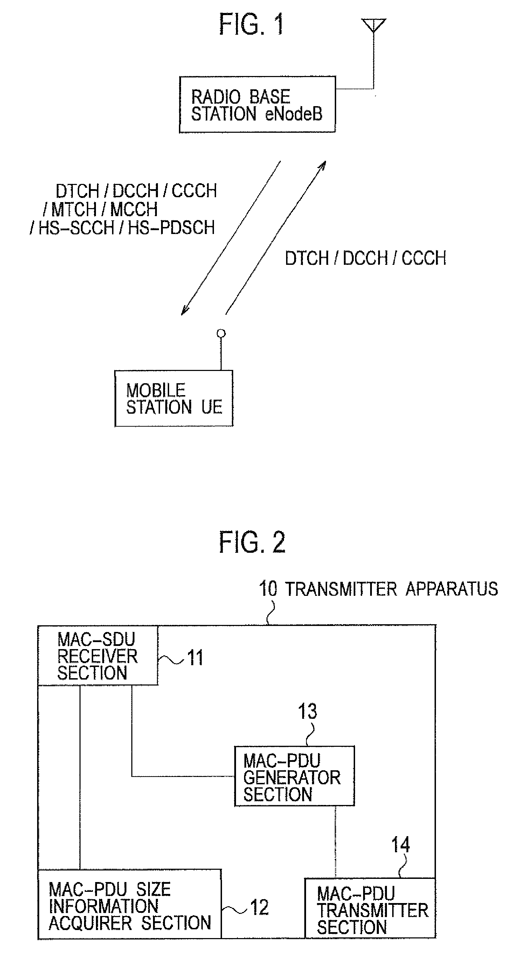

As shown in Fig. 1, a mobile communication system standardized by the 3GPP (3rd Generation Partnership Project) is configured as follows. Specifically, a radio base station NodeB (transmitter apparatus) transmits a DCCH (Dedicated Control Channel), a DTCH (Dedicated Traffic Channel), a CCCH (Common Control Channel) and the like to a mobile station UE (receiver apparatus) in downlink.

On the other hand, in uplink, the mobile station UE (transmitter apparatus) transmits a DCCH, a DTCH, a CCCH and the like to the radio base station NodeB (receiver apparatus).

Moreover, as a logical channel for MBMS (Multimedia Broadcast and Multicast Service) standardized by the 3GPP, the radio base station NodeB (transmitter apparatus) transmits an MTCH (MBMS Traffic Channel) and an MCCH (MBMS Control Channel) to the mobile station UE (receiver apparatus) in downlink.

In addition, in downlink, as a physical channel for the HSDPA (High Speed Downlink Packet Access) that is the downlink high speed packet communication standard defined by the 3GPP, the radio base station NodeB (transmitter apparatus) transmits an HS-SCCH (High Speed Shared Control Channel), an HS-PDSCH (High Speed Physical Downlink Shared Channel) and the like to the mobile station UE (receiver apparatus).

Additionally, in the HSDPA, the radio base station NodeB (transmitter apparatus) generates an MAC-hs PDU in the MAC-hs layer by multiplexing one or more MAC-d PDUs (Protocol Data Unit) received from the MAC-d layer, and transmits the generated MAC-hs PDU by using the HS-DSCH (High Speed Downlink Shared Channel) associated with the HS-PDSCH.

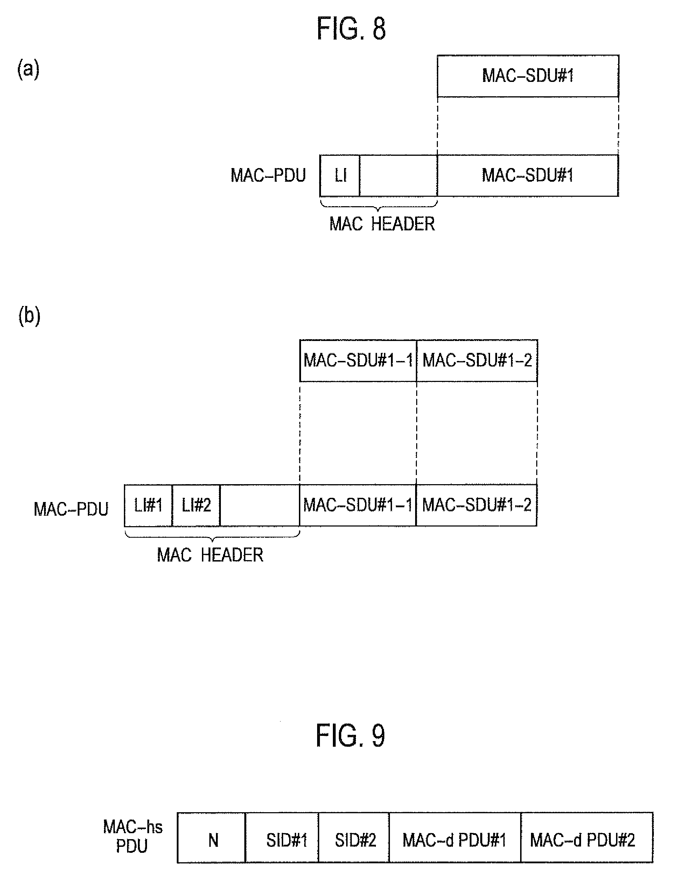

Here, the MAC-d PDUs multiplexed into the MAC-hs PDU are in a fixed size for each MAC-d flow. As shown in Fig. 9, an MAC header is added to the MAC-hs PDU in the MAC-hs layer of the radio base station NodeB (transmitter apparatus), the MAC header including an "SID (Size Index Identifier)" indicative of the size of an MAC-d PDU for each MAC-d flow, and "N (Number of MAC-d PDUs)" indicative of the number of the MAC-d PDUs.

Meanwhile, LTE (Long Term Evolution) aims to accomplish a downlink transmission rate of 100 Mbps or higher and an uplink transmission rate of 50 Mbps or higher.

In the LTE, the size of an MAC-SDU multiplexed into an MAC-PDU is variable unlike the HSDPA, and the size of the MAC-PDU transmittable per TTI (Transmission Time Interval), which is a unit of time, is large. Accordingly, a sufficient length is required also for "LI (Length Indicator)" for indicating the sizes of respective MAC-SDUs.

For example, when communication is performed at 100 Mbps and if one TTI is 1 ms, 12,500 byte packets are transmitted per TTI. In this case, assuming that the granularity of "LI (Length Indicator)" is one byte, the "LI" needs 14 bits or more in order to express the size (length) of an MAC-PDU.

However, environments where 100-Mbps communication is actually performed are limited. Accordingly, always including 14-bit-long "LI" in the MAC header leads to a problem of inefficiency.

Specifically, there is a problem of always needing 14 bits for each of information elements (e.g., MAC SDUs) constituting an MAC-PDU, even in an environment, such as an edge of a cell, where the effective transmission rate is lower than 100 Mbps.
Non-patent Document 1: 3GPP TS 25.321 v7.0.0

### DISCLOSURE OF THE INVENTION

The present invention has been made in consideration of the above problem, and has an objective to provide a transmitter apparatus and a receiver apparatus capable of mitigating an overhead increase caused by an increase in the number of bits necessary for information indicating the size of a data unit being multiplexed.

A first aspect of the present invention is summarized as a transmitter apparatus including: a higher-layer data unit receiver section configured to receive a higher-layer data unit in a first layer from a layer higher than the first layer; a first-data-unit generator section configured to generate a first data unit by multiplexing the received higher-layer data unit; and a first-data-unit transmitter section configured to transmit the generated first data unit, wherein header information added in the first data unit includes fixed-length size information indicating a size of the higher-layer data unit multiplexed into the first data unit, and the layer higher than the first layer is configured to transmit the higher-layer data unit to the first layer, the size of the higher-layer data unit being not larger than a maximum size settable by the fixed-length size information.
In the first aspect, the number of pieces of the size information included in the header information can be one number smaller than a number of the higher-layer data units being multiplexed.

### BRIEF DESCRIPTION OF THE DRAWINGS

[Fig. 1] Fig. 1 is a diagram of an overall configuration of a mobile communication system according to a first embodiment of the present invention.
[Fig. 2] Fig. 2 is a functional block diagram of a transmitter apparatus according to the first embodiment of the present invention.
[Fig. 3] Fig. 3 is a diagram showing a protocol stack in the mobile communication system according to the first embodiment of the present invention.
[Fig. 4] Fig. 4 is a diagram showing an example of a format of an MAC-PDU transmitted by a transmitter apparatus according to the first embodiment of the present invention.
[Fig. 5] Fig. 5 is a functional block diagram of a receiver apparatus according to the first embodiment of the present invention.
[Fig. 6] Fig. 6 is a flowchart showing an operation of the transmitter apparatus according to the first embodiment of the present invention.
[Fig. 7] Fig. 7 is a flowchart showing an operation of the receiver apparatus according to the first embodiment of the present invention.
[Fig. 8] Fig. 8 is a view showing an example of a format of an MAC-hs PDU transmitted by a transmitter apparatus according to Modification 1 of the present invention.
[Fig. 9] Fig. 9 is a diagram showing an example of a format of an MAC-hs PDU used in HSDPA.

### BEST MODE FOR CARRYING OUT THE INVENTION

### (Configuration of Mobile Communication System According to First Embodiment of Present Invention)

### (Configuration of Mobile Communication System According to First Embodiment of the Present Invention)

With reference to Figs. 1 to 5, descriptions will be given of a configuration of a mobile communication system including a transmitter apparatus 10 and a receiver apparatus 30 according to a first embodiment of the present invention. The configuration of the mobile communication system according to the present embodiment is one standardized under LTE.

Here, a radio base station eNodeB may be the transmitter apparatus 10 according to the present embodiment, and a mobile station UE may be the receiver apparatus 30 according to the present embodiment. Instead, a radio base station eNodeB may be the receiver apparatus 30 according to the present embodiment, and a mobile station UE may be the transmitter apparatus 10 according to the present embodiment.

As shown in Fig. 2, as functions of an MAC (Medium Access Control) layer (the first layer), the transmitter apparatus 10 includes an MAC-SDU (Service Data Unit) receiver section 11, an MAC-PDU size information acquirer section 12, an MAC-PDU generator section 13, and an MAC-PDU transmitter section 14.

The MAC-PDU size information acquirer section 12 is configured to acquire MAC-PDU size information indicating an MAC-PDU size.

For example, assuming that the transmitter apparatus 10 is a mobile station UE transmitting uplink data, the transmitter apparatus 10 is configured to acquire the MAC-PDU size information indicating an MAC-PDU size from the physical layer (which is a layer lower than the MAC layer).

In this case, the MAC-PDU size information acquirer section 12 is configured to be notified of a transport block size which is equivalent to the MAC-PDU size by the physical layer by using an L1/L2 control channel (MAC-PDU size information) transmitted by the radio base station eNodeB, the transport block size which is equivalent to the MAC-PDU size.

Alternatively, the MAC-PDU size information acquirer section 12 of the mobile station UE may be configured to set a transport block size equivalent to the MAC-PDU size to a value smaller than a value notified of by the physical layer by using an L1/L2 control channel (MAC-PDU size information) transmitted by the radio base station eNodeB.

On the other hand, assuming that the transmitter apparatus 10 is the radio base station eNodeB transmitting downlink data, the transmitter apparatus 10 is configured to acquire the MAC-PDU size information indicating an MAC-PDU size from a scheduler being an MAC-layer function.

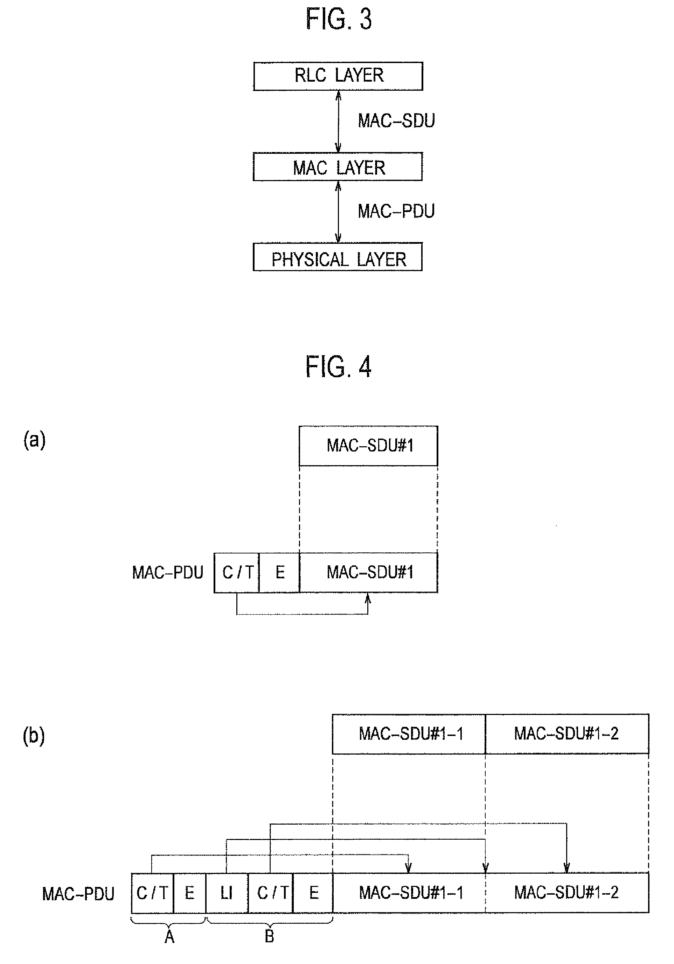

The MAC-SDU receiver section 11 is configured to receive an MAC-SDU (higher-layer data unit) from an RLC (Radio Link Control) layer (which is a layer higher than the MAC layer) (see Fig. 3).

Here, the RLC layer is configured to transmit an MAC-SDU (higher-layer data unit) of size not more than a maximum size settable by fixed-length "LI (size information)" to the MAC layer (the maximum size is called a predetermined size below).

In addition, the RLC layer is configured to transmit an MAC-SDU (higher-layer data unit) of size appropriate for the MAC-PDU size acquired by the MAC-PDU size information acquirer section 12.

The MAC-PDU generator section 13 is configured to generate an MAC-PDU in the MAC layer by multiplexing an information element which is any of the MAC-SDU received from the RLC layer, an MAC control block (control information), and a Padding (padding information).

Specifically, the MAC-PDU generator section 13 is configured to generate an MAC-PDU by multiplexing multiple MAC-SDUs received by the MAC-SDU receiver section 11, when the MAC-PDU size notified of by the physical layer or by the scheduler is larger than the predetermined size.

On the other hand, the MAC-PDU generator section 13 is configured to generate an MAC-PDU by multiplexing one MAC-SDU received by the MAC-SDU receiver section 11, when the MAC-PDU size notified of by the physical layer or by the scheduler is smaller than or equal to the predetermined size.

Fig. 4(a) shows an example where the MAC-PDU generator section 13 generates an MAC-PDU by multiplexing one MAC-SDU #1, while Fig. 4(b) shows an example where the MAC-PDU generator section 12 generates an MAC-PDU by multiplexing multiple MAC-SDUs: an MAC-SDU #1-1 and an MAC-SDU #1-2.

In the example shown in Fig. 4(a), the MAC-PDU size notified of by the physical layer or by the scheduler is smaller than or equal to the predetermined size, while in the example shown in Fig. 4(b), the MAC-PDU size notified of by the physical layer is larger than the predetermined size. In the example in Fig. 4(a), the MAC-PDU generator section 13 is configured to add an MAC header including a set composed of "C/T" and "E" to the MAC-SDU #1.

In other words, as shown in Fig. 4(a), the MAC-PDU generator section 13 is configured to include no "LI (Length Indicator)" in the MAC-header when only one MAC-SDU #1 is multiplexed into the MAC-PDU.

Here, "C/T" is information identifying the logical channel for the MAC-SDU #1, an MAC control block, and a Padding, which are multiplexed into the MAC-PDU. In the example in Fig. 4 (a), "C/T" is information identifying the logical channel for the MAC-SDU #1 multiplexed into the MAC-PDU.

In addition, "E (Extension)" is information indicating whether or not the "E" is positioned at the end of the MAC header.

For example, when "E" is "0", the "E" indicates that the "E" is positioned at the end of the MAC header and is followed by any one of the MAC-SDU, the MAC controller block, and the Padding.

When "E" is "1", on the other hand, the "E" indicates that the "E" is not positioned at the end of the MAC header but is followed by another set composed of ""LI", "C/T", and "E."

In the example in Fig. 4(a), "E" indicates that the "E" is positioned at the end of the MAC header and is followed by the MAC-SDU #1.

In the example in Fig. 4(b), the MAC-PDU generator 13 is configured to add an MAC header including a set A composed of "C/T" and "E" and a set B composed of "LI", "C/T", and "E", to the MAC-SDU #1-1 and the MAC-SDU #1-2.

As shown in Fig. 4(b), the MAC header (header information) added in the MAC-PDU includes "LI (size information)" indicating the sizes of the multiple MAC-SDUs multiplexed into the MAC-PDU.

Specifically, the MAC-PDU generator section 13 is configured as follows. When multiple SDUs (the MAC-SDU #1-1 and the MAC-SDU #1-2) are multiplexed into the MAC-PDU, the MAC-PDU generator section 13 adds an MAC header (header information) including the size of the multiple MAC-SDUs, as shown in Fig. 4(b).

In the example in Fig. 4(b), "C/T" in the set A is information identifying the logical channel for the MAC-SDU #1-1 multiplexed into the MAC-PDU, and "E" in the set A indicates that the "E" is not positioned at the end of the MAC header.

Moreover, in the example in Fig. 4(b), "LI" in the set B is information indicating the size of either the MAC-SDU #1-1 or the MAC-SDU #1-2; "C/T" in the set B is information identifying the logical channel for the MAC-SDU #1-2 multiplexed into the MAC-PDU; and "E" in the set B indicates that the "E" is positioned at the end of the MAC header.

As shown in Figs. 4(a) and 4(b), the number of "LIs" included in the MAC header is one number smaller than the number of MAC-SDUs being multiplexed. Note that the size of each of the MAC-SDU, the MAC control block, and the Padding is variable.

In addition, the length of "LI" mentioned above is fixed, and the predetermined size mentioned above is a maximum size settable by the fixed-length "LI".

For example, when the length of "LI", namely, the number of bits for "LI", is "10 bits", a size settable by the "LI" is from "1 byte" to "1024 bytes". Accordingly, the predetermined size in this case is "1024 bytes".

The MAC-PDU generator section 13 is configured to generate an MAC-PDU by multiplexing multiple MAC-SDUs, when the MAC-PDU size is larger than "1024 bytes" in such a case.

The MAC-PDU transmitter section 14 is configured to transmit the MAC-PDU generated by the MAC-PDU generator section 13 to the physical layer, as a single transport block.

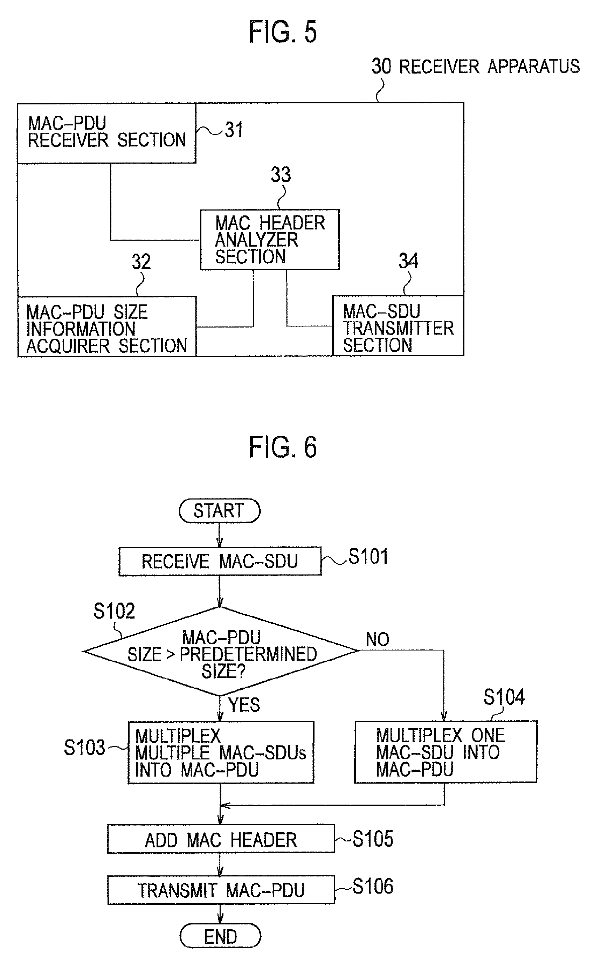

As shown in Fig. 5, as MAC layer functions, the receiver apparatus 30 includes an MAC-PDU receiver section 31, an MAC-PDU size information acquirer section 32, an MAC header analyzer section 33, and an MAC-SDU transmitter section 34.

The MAC-PDU receiver section 31 is configured to receive the MAC-PDU, transmitted by the transmitter apparatus 10, via the physical layer (see Fig. 3).

The MAC-PDU size information acquirer section 32 is configured to acquire MAC-PDU size information indicating the size of the MAC-PDU.

For example, assuming that the receiver apparatus 30 is a mobile station UE receiving downlink data, the receiver apparatus 30 is configured to acquire the MAC-PDU size information indicating the size of an MAC-PDU from the physical layer.

In this case, the MAC-PDU size information acquirer section 32 of the mobile station UE is configured to be notified of a transport block size by the physical layer by using an L1/L2 control channel (MAC-PDU size information) transmitted by the radio base station eNodeB, the transport block size being equivalent to the size of the MAC-PDU.

On the other hand, assuming that the receiver apparatus 30 is a radio base station eNodeB transmitting uplink data, the receiver apparatus 30 is configured to acquire the MAC-PDU size information indicating the size of the MAC-PDU from a scheduler being an MAC-layer function.

Alternatively, the MAC-PDU size information acquirer section 32 of the radio base station eNodeB may be configured to be notified of a transport block size by the physical layer by using an L1/L2 control channel (MAC-PDU size information) transmitted by the mobile station UE, the transport block size being equivalent to the size of the MAC-PDU.

The MAC header analyzer section 33 is configured to detect the size of an information element (an MAC-SDU, an MAC control block, or a Padding) multiplexed into the MAC-PDU, based on "LI (size information) included in the MAC header of the MAC-PDU received in the MAC layer and on the MAC-PDU size information acquired by the MAC-PDU size information acquirer section 32.

Here, when the MAC header of the MAC-PDU received by the MAC-PDU receiver section 31 includes no "LI", the MAC header analyzer section 33 can detect the size of the information element (an MAC-SDU, an MAC control block, or a Padding) multiplexed into the MAC-PDU, based on the size of the MAC-PDU indicated by the MAC-PDU size information acquired by the MAC-PDU size information acquirer section 32 and on the size of the MAC header.

In this case, specifically, the MAC header analyzer section 33 obtains the size of the information element multiplexed into the MAC-PDU by subtracting the size of the MAC header from the size of the MAC-PDU.

In the example in Fig 4 (a), based on "C/T", the MAC header analyzer section 33 recognizes that the MAC-SDU #1 is the information element multiplexed into the MAC-PDU. Then, the MAC header analyzer section 33 recognizes that a value obtained by subtracting the size of the MAC header from the size of the MAC-PDU is the size of the MAC-SDU #1 multiplexed into the MAC-PDU.

In the example in Fig. 4(b), based on "C/Ts", the MAC header analyzer section 33 recognizes that the MAC-SDU #1-1 and the MAC-SDU #1-2 are the information elements multiplexed into the MAC-PDU. Then, the MAC header analyzer section 33 recognizes the sizes of the MAC-SDU #1-1 and the MAC-SDU #1-2, based on the size of the MAC-PDU and "LI".

The MAC-SDU transmitter section 34 is configured to extract the information element from the MAC-PDU, based on the size of the information element detected by the MAC header analyzer section 33.

Moreover, the MAC-SDU transmitter section 34 is configured to transmit the extracted MAC-SDU to the RLC layer.

### (Operation of Mobile Communication System According to First Embodiment of the Present Invention)

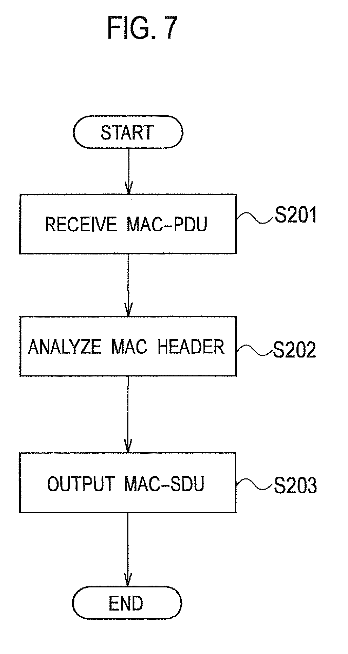

With reference to Figs. 6 and 7, description will be given of an operation of the mobile communication system according to the first embodiment of the present invention.

In the first place, an operation of the transmitter apparatus 10 according to the present embodiment will be described with reference to Fig. 6.

As shown in Fig. 6, in Step S101, an MAC-layer function of the transmitter apparatus 10 receives an MAC-SDU to be transmitted to the receiver apparatus 30, from an RLC-layer function of the transmitter apparatus 10.

Specifically, in Step S101, the RLC-layer function of the transmitter apparatus 10 transmits the MAC-SDU of a size smaller than or equal to the predetermined size and appropriate for the MAC-PDU size acquired by the MAC-PDU size information acquirer section 12, to the MAC-layer function of the transmitter apparatus 10.

When the MAC-PDU size notified of by the physical layer or the scheduler is determined as being larger than the predetermined size, in Step S102 an MAC-layer function of the transmitter apparatus 10 multiplexes multiple MAC-SDUs received from the RLC-layer function into an MAC-PDU (see Fig. 4(b)).

On the other hand, when the MAC-PDU size notified of by the physical layer or the scheduler is determined as being smaller than or equal to the predetermined size, in Step S102 the MAC-layer function of the transmitter apparatus 10 multiplexes one MAC-SDU received from the RLC-layer function into an MAC-PDU (see Fig. 4(a)). Then, in Step S105, the MAC-layer function of the transmitter apparatus 10 generates the MAC-PDU in which an MAC header is added. In Step S106, an MAC-layer function transmits the generated MAC-PDU to the receiver apparatus 30 via a physical-layer function of the transmitter apparatus 10.

In the second place, an operation of the receiver apparatus 30 according to the present embodiment will be described with reference to Fig. 7.

As shown in Fig. 7, in Step S201, an MAC layer function of the receiver apparatus 30 receives an MAC-PDU transmitted by the transmitter apparatus 10, via the physical layer of the receiver apparatus 30.

In Step S202, an MAC layer function of the receiver apparatus 30 analyzes the MAC header added in the MAC-PDU thus received.

In Step S202, when determined that the MAC header added in the received MAC-PDU includes no "LI", the MAC layer function of the receiver apparatus 3010 identifies an information element multiplexed into the MAC-PDU, based on "C/T" included in the MAC header. Then, the MAC layer function acquires the information element thus identified (e.g., an MAC-SDU), based on the size of the MAC-PDU included in the MAC-PDU size information notified of by the physical layer or by the scheduler and on the size of the MAC header.

On the other hand, in Step S202, when determined that the MAC header added in the received MAC-PDU includes "LI", the MAC layer function of the receiver apparatus 30 identifies an information element multiplexed into the MAC-PDU, based on "C/T" included in the MAC header. Then, the MAC layer function acquires the information element thus identified (e.g., an MAC-SDU), based on the size of the MAC-PDU included in the MAC-PDU size information notified of by the physical layer or by the scheduler, on the size of the MAC header, and on "LI".

In Step S203, an MAC-layer function of the receiver apparatus 30 outputs an MAC-SDU extracted from the MAC-PDU based on results of analyzing the MAC header.

### (Operations and Effects of the Mobile Communication System According to First Embodiment of the Present Invention)

The mobile communication system according to the first embodiment of the present invention allows the length of "LI" (the number of bits necessary for "LI") included in an MAC header to be a fixed length (fixed number of bits). Accordingly, in high-speed packet communications, this can mitigate an overhead increase caused by an increase in the number of bits necessary for "LI" indicating the size of an MAC-PDU being multiplexed.

### (Modification 1)

A format of an MAC-PDU transmitted between the transmitter apparatus 10 and the receiver apparatus 30 is not limited to those shown in Figs. 4(a) and 4(b). The present invention is also applicable when the format of an MAC-PDU is any format as long as the MAC header includes size information indicating the size of an information element, such as an MAC-SDU, multiplexed into the MAC-PDU.

For example, the present invention is also applicable when an MAC-PDU format as the ones shown in Figs. 8 (a) and 8 (b) is used instead of the MAC header having one or more sets each composed of "LI", "C/T", and "E". Specifically, MAC headers shown in Figs. 8 (a) and 8 (b) include one or more "LIs" indicating the sizes of multiplexed MAC-SDUs.

Hereinabove, the present invention has been described in detail by use of the foregoing embodiment. It is obvious, however, to those skilled in the art that the present invention should not be limited to the embodiment described in this description. The present invention is implementable as modified and improved embodiments without departing from the sprit and the scope of the present invention defined by the description of the scope of the appended claims. Therefore, the explanation of this description is intended only to explain an illustrative example of the present invention, and is not intended to impose any limitation on the present invention.

### INDUSTRIAL APPLICABILITY

As described above, the present invention can provide a transmitter capable of mitigating an overhead increase caused by an increase in the number of bits necessary for information indicating the size of a data unit being multiplexed, in high-speed packet communication.

## Claims

1. A transmitter apparatus comprising:
a higher-layer data unit receiver section configured to receive a higher-layer data unit in a first layer from a layer higher than the first layer;
a first-data-unit generator section configured to generate a first data unit by multiplexing the received higher-layer data unit; and
a first-data-unit transmitter section configured to transmit the generated first data unit, wherein
header information added in the first data unit includes fixed-length size information indicating a size of the higher-layer data unit multiplexed into the first data unit, and
the layer higher than the first layer is configured to transmit the higher-layer data unit to the first layer, the size of the higher-layer data unit being not larger than a maximum size settable by the fixed-length size information.

2. The transmitter apparatus according to claim 1, wherein
the number of pieces of the size information included in the header information is one number smaller than a number of the higher-layer data units being multiplexed.
